Europäisches Patentamt

European Patent Office

Office européen des brevets

(19)

(11) Veröffentlichungsnummer: **0 287 026**
**B1**

(12) **EUROPÄISCHE PATENTSCHRIFT**

(45) Veröffentlichungstag der Patentschrift:
14.11.90

(51) Int. Cl.⁵: **C04B 41/48**

(21) Anmeldenummer: **88105787.1**

(22) Anmeldetag: **12.04.88**

(54) Verfahren zum Schutz, zur Sanierung und Restaurierung von steinernen Bauwerken, Denkmälern und dergleichen.

(30) Priorität: **16.04.87 DE 3712967**

(43) Veröffentlichungstag der Anmeldung:
**19.10.88 Patentblatt 88/42**

(45) Bekanntmachung des Hinweises auf die Patenterteilung:
**14.11.90 Patentblatt 90/46**

(84) Benannte Vertragsstaaten:
**AT BE CH DE ES FR GB GR IT LI LU NL SE**

(56) Entgegenhaltungen:
EP-A- 0 259 644
DE-A- 2 713 857
DE-A- 3 135 941
FR-A- 2 410 709

CHEMICAL ABSTRACTS, Band 88, Nr. 22, 29. Mai 1978, Seite 318, Zusammenfassung Nr. 157472v, Columbus, Ohio, US; & JP-A-77 109 518 (KOWA CHEMICAL INDUSTRIES CO., LTD) 13-09-1977
CHEMICAL ABSTRACTS, Band 100, Nr. 10, März 1984, Seite 295, Zusammenfassung Nr. 73078z, Columbus, Ohio, US; & JP-A-58 172 281 (MATSUSHITA ELECTRIC WORKS, LTD) 11-10-1983

(73) Patentinhaber: **Rabe, Jürgen Walter, Bessenbacher Weg 70, D-8750 Aschaffenburg(DE)**

(72) Erfinder: **Rabe, Jürgen Walter, Bessenbacher Weg 70, D-8750 Aschaffenburg(DE)**

(74) Vertreter: **Becker, Thomas, Dr., Dipl.-Ing. et al, Patentanwälte Becker & Müller Eisenhüttenstrasse 2, D-4030 Ratingen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Steinerne Bauwerke oder Denkmäler, nachfolgend der Einfachheit halber als Bauwerke bezeichnet, sind über die Jahre hin einer ständigen Einwirkung der Atmosphäre unterworfen. Die in der Atmosphäre enthaltenen Schadstoffe, wie Kohlendioxid, Kohlenmonoxid, Schwefeldioxid oder Stickoxide wirken zusammen mit der durch Regen und Nebel aufgebrachten Feuchtigkeit ständig auf die Oberfläche der Bauwerke ein, Schmutz wird in den Poren abgelagert und zusammen mit den von Mikroorganismen erzeugten Stoffwechselprodukten wird das Steingefüge der Bauwerke zerstört, und so je nach Art des im Bauwerk verwendeten Steinmaterials ein mehr oder weniger schneller Abtrag bewirkt. Dies führt im Laufe der Jahre zu einer ständig fortschreitenden Zerstörung des Bauwerkes.

Insbesondere bei historischen Bauwerken erweist sich dieser ständige Zerstörungsprozeß als unangenehm, weil dadurch unersetzbare Werte für immer verloren gehen.

Man hat bereits große Anstrengungen gemacht, um diesem Zerstörungsprozeß Einhalt zu gebieten und um weiterhin die bereits entstandenen Schäden zu sanieren. Hierzu behandelt man Steinmaterialien mit Lösungen von Kieselsäureester. Man führt also dem Stein einen Teil seiner natürlichen Bindemittel wieder zu.

Das bekannte Kieselsäureester-Verfahren ist indessen für kalkgebundene Materialien nur in eingeschränktem Umfang anwendbar. Darüber hinaus ist ein weiterer Nachteil darin zu sehen, daß die in dem Steinmaterial vorhandenen Poren weitgehend verschlossen werden, so daß die natürliche Atmung des Steinmaterials nach der Behandlung beeinträchtigt wird.

Aus ähnlichen Erwägungen heraus ist auch das aus der DE-A 2 713 857 offenbarte Verfahren nicht akzeptabel. Hier werden die Bauwerke mit einer Isocyanat-Lösung so behandelt, daß eine Isolierung beziehungsweise Versiegelung auf der Oberfläche aufgebracht wird. Eine solche Maßnahme würde zu einem Verschluß der offenen Porosität bei einem Bauwerk der gattungsgemäßen Art führen und damit die beschriebenen Unregelmäßigkeiten in der Steinsubstanz nicht behandeln, sondern allenfalls kaschieren.

Aus der Literaturstelle "Chemical abstracts", Band 88, Nr. 22, 29. Mai 1978, Seite 318, Zusammenfassung Nr. 157 472v ist es bekannt, Betonteile mit Polyisocyanat-Prepolymerlösungen zu behandeln. Einerseits sollen damit Risse repariert werden, andererseits soll die Abriebfestigkeit des Betons erhöht werden. Auch hier handelt es sich ausschließlich um eine Versiegelung der Betonoberfläche, die eine Dampfdiffusion völlig verhindert.

In der DE-A 3 135 941 ist ein Verfahren zur Oberflächenbehandlung von Bauteilen, nämlich von Bauteilen aus Leichtbau-Porenbeton, beschrieben. Das Urethanbeschichtungsmaterial dringt hier in die offenen Poren der Betonmasse ein und schließt die Poren völlig. Dies geht bereits daraus hervor, daß der Feststoffanteil des Beschichtungsmaterials bei 30 bis 60 Prozent liegt.

Ausgehend von diesem Stand der Technik ist es Aufgabe der Erfindung, ein Verfahren zum Schutz, zur Sanierung und zur Restaurierung von steinernen Bauwerken offener Porosität zu schaffen, welches für alle Steinmaterialien anwendbar ist, und bei welchem vor allem das im Steinmaterial vorhandene Kapillargefüge aufrechterhalten bleibt.

Das erfindungsgemäße Verfahren zur Behandlung von Bauwerken läßt sich unterteilen in ein Verfahren, das ausschließlich zum Schutz noch nicht beschädigter Bauwerke dient, weiterhin in ein Verfahren zur Sanierung bereits beschädigter Bauwerke und schließlich in ein Verfahren zur Restaurierung stark beschädigter Bauwerke.

Entsprechend dieser Aufteilung umfaßt der erfindungsgemäße Vorschlag die drei alternativen Verfahren nach den Ansprüchen 1 bis 3.

Bei der Hydrophobierung nach Anspruch 1 dringt die Isocyanatlösung einige mm in das Steinmaterial ein. Das Lösungsmittel verdampft und das Isocyanat reagiert mit der Feuchtigkeit unter Ausbildung eines Polymerfilms, der die Oberfläche des Steins und das gesamte Kapillarsystem, und zwar die Kapillarwandungen in der vorstehend angegebenen Tiefe mit einem Polymerfilm überzieht. Die Kapillaren selbst bleiben indessen offen, und somit bleibt die Dampfdiffusionsfähigkeit des Steinmaterials weitestgehend erhalten.

Auf diese Weise wird eine Hydrophobierung der Oberfläche erreicht, die bewirkt, daß der Stein wasserabstoßend wird. Der Regen und der damit aufgebrachte Schmutz perlen also von dem Stein ab, und der Schmutz selbst wird nicht mehr auf dem Stein abgelagert. Damit entfällt der Lebensraum für die Mikroorganismen, die infolge ihrer Stoffwechselprodukte eine erste Anlösung des Steingefüges verursachen und dadurch die Voraussetzung für das Eindringen weiterer Feuchtigkeit und weiteren Schmutzes und die Einwirkung der in der Atmosphäre enthaltenen Schadstoffe schaffen.

Die für die Hydrophobierung notwendige Konzentration des Isocyanats in dem Lösungsmittel hängt von der Größe des Kapillarsystems des Steinmaterials ab. Eine ganz grobe Struktur des Steins erfordert einen wesentlich höheren Isocyanatanteil in der Lösung als eine feine Kapillarstruktur.

Die Konzentration der Lösung wird daher zweckmäßig anhand empirischer Versuche bestimmt.

Zur Sanierung von bereits beschädigten Bauwerken wird gemäß Anspruch 2 eine Lösung aus 3 bis 15 Gew.-% aliphatischem Isocyanat und 97 bis 85 Gew.-% des damit inerten Lösungsmittels oder nach einer altelnativen Ausführungsform der damit inerten Lösungsmittelgemische aufgetragen.

Diese Lösung dringt in die Poren ein, überzieht die Kapillarwandungen mit einem Polymerfilm und verfestigt so das bereits beschädigte Steingefüge. Die Kapillaren selbst bleiben jedoch intakt und stehen für die Dampfdiffusion des Steins weiter zur Verfügung.

Bei dem Verfahren entsteht keine geschlossene Oberflächenschicht, und es findet auch keine direkte chemische Reaktion mit dem Steinmaterial selbst statt. Es kommt nicht zur Krustenbildung.

Die Verfestigung erfolgt lediglich durch Eindringen in die Kapillarräume und Auskleiden der Wände der Kapillaren mit dem Polymerfilm, was zur Folge hat, daß die Art des Steins für das Verfahren völlig unbeachtlich ist und demzufolge auch im Gegensatz zu dem bekannten Kieselsäureester-Verfahren für das erfindungsgemäße Verfahren keine Beschränkung darstellt.

Die Restaurierung stark beschädigter Bauwerke erfolgt gemäß Anspruch 3 durch Auftragen einer formbaren Masse aus einer Lösung aus 8 bis 30 Gew.-% aliphatischem Isocyanat und 92 bis 70 Gew.-% von damit inertem Lösungsmittel und mineralischen Bestandteilen.

Bei einer aufgetragenen formbaren Steinersatzmasse verdunstet das Lösungsmittel, und das zurückbleibende Isocyanat härtet unter dem Feuchtigkeitseinfluß aus, und die ausgehärtete Masse ersetzt die bereits verlorengegangene Steinsubstanz. Durch entsprechende Auswahl der in der formbaren Masse verwendeten mineralischen Bestandteile weisen die ersetzten Steinteile das gleiche Aussehen auf wie der Reststein.

Für das Aufbringen der Lösung finden die in den Ansprüchen genannten Verfahrenstechniken Anwendung. Ist für die Sanierung bereits beschädigter Bauwerke ein Tränken der Lösung wegen der Größe des Bauwerkes nicht möglich, so erfolgt ein mehrfaches Aufpinseln, Aufsprühen oder Auftragen mittels eines Fließfilmes (Fluten).

Das bei dem erfindungsgemäßen Verfahren zur Anwendung kommende Isocyanat ist vorzugsweise ein Polyisocyanat-Prepolymer. Ein solches Prepolymer weist reaktionsfähige Isocyanatgruppen auf, die mit Luftfeuchtigkeit reagieren können und dabei Polymere bilden. Während der Gehalt an reaktionsfähigen NCO-Gruppen vorzugsweise bei ca. 8,5 Gew.-% liegt, liegt das Äquivalentgewicht vorzugsweise im Bereich von 500.

Auch andere Polyisocyanat-Prepolymere, die nach dem Einbringen in das Steingefüge polymerisieren und damit aushärten, können verwendet werden.

Die bevorzugten Lösungsmittel werden nach Gesichtspunkten wie geringe Toxizität, Wohlfeilheit, gute Lösungseigenschaften oder gute Benetzung des Steinmaterials ausgewählt.

Bevorzugte Lösungsmittel ergeben sich aus Anspruch 6.

Für die Behandlung mit aliphatischem Isocyanat können auch Lösungsmittelkombinationen Anwendung finden. Bevorzugte Lösungsmittelmischungen sind im Anspruch 7 angegeben.

**Patentansprüche für die Vertragsstaaten: AT, CH, ES, GR, LI, LU, SE**

1. Verfahren zur Hydrophobierung von durch Umwelteinflüsse und/oder Mikroorganismen unbeschädigten, steinernen Bauwerken offener Porosität mit folgenden Schritten:

    1.1 eine Lösung aus einem aliphatischen Isocyanat und einem oder mehreren, gegenüber dem Isocyanat inerten Lösungsmittel(n) wird auf das Bauwerk durch Aufsprühen, Aufpinseln oder Fluten aufgebracht, wobei

    1.2 die Konzentration des Isocyanats in der Lösung innerhalb von Bereichsgrenzen zwischen 1 und 10 Gew.-%, entsprechend einem Lösungsmittelanteil zwischen 99 und 90 Gew.-%, in Abhängigkeit von der Größe der offenen Kapillarstruktur des Bauwerkes zuvor so eingestellt wurde, daß die Lösung nach Einwirken von Feuchtigkeit unter Ausbildung eines Polymerfilms auf der Oberfläche der Kapillarwandungen, unter Aufrechterhaltung der Dampfdiffusionsfähigkeit innerhalb des Kapillarsystems, aushärtet.

2. Verfahren zur Verfestigung von durch Umwelteinflüsse und/oder Mikroorganismen geschädigten, steinernen Bauwerken offener Porosität mit folgenden Schritten:

    2.1 eine Lösung aus einem aliphatischen Isocyanat und einem oder mehreren, gegenüber dem Isocyanat inerten Lösungsmittel(n) wird auf das Bauwerk durch Tränken, Fluten oder mehrfaches Aufsprühen oder Aufpinseln aufgebracht, wobei

    2.2 die Konzentration des Isocyanats in der Lösung innerhalb der Bereichsgrenzen zwischen 3 und 15 Gew.-%, entsprechend einem Lösungsmittelanteil zwischen 87 und 85 Gew.-%, in Abhängigkeit von der Größe der offenen Kapillarstruktur des Bauwerkes zuvor so eingestellt wurde, daß die Lösung nach Einwirken von Feuchtigkeit die Kapillarwandungen mit einem Polymerfilm überzieht und aushärtet und das beschädigte Steingefüge verfestigt, unter Aufrechterhaltung der Dampfdiffusionsfähigkeit innerhalb des Kapillarsystems.

3. Verfahren zur Restaurierung von durch Umwelteinflüsse und/oder Mikroorganismen stark beschädigten, steinernen Bauwerken offener Porosität mit teilweise verlorengegangener Steinsubstanz, mit folgenden Schritten:

    3.1 eine formbare Masse aus einem aliphatischen Isocyanat und einem oder mehreren, gegenüber dem Isocyanat inerten Lösungsmittel(n) sowie mineralischen Bestandteilen wird auf die beschädigten Stellen des Bauwerkes aufgebracht, wobei

    3.2 die Konzentration des Isocyanats, bezogen auf die Lösung aus Isocyanat und Lösungsmittel, 8 bis 30 Gew.-%, entsprechend einem Lösungsmittelanteil zwischen 92 und 70 Gew.-%, beträgt und

    3.3 die Masse anschließend unter Bildung eines Steinersatzes unter Feuchtigkeitseinfluß aushärtet.

4. Verfahren nach einem der Ansprüche 1 bis 3, wobei als aliphatisches Isocyanat ein Polyisocyanat-Prepolymer verwendet wird.

5. Verfahren nach Anspruch 4 mit der Maßgabe, daß ein Polyisocyanat-Prepolymer verwendet wird, dessen Gehalt an reaktionsfähigen NCO-Gruppen circa 8,5 Gew.-% beträgt.

6. Verfahren nach einem der Ansprüche 1 bis 5 mit der Maßgabe, daß das Lösungsmittel aus Xylol, Methylisobutylketon, Solvent-Naphtha, Toluol, Äthylacetat, Isobutylacetat, Aceton oder Methoxypropylacetat einzeln oder in Mischungen besteht.

7. Verfahren nach Anspruch 6 mit der Maßgabe, daß eine der folgenden Lösungsmittelmischungen verwendet wird:

- 30 Gewichtsteile Xylol, 100 Gewichtsteile Methylisobutylketon.
- 250 Gewichtsteile Isobutylacetat, 180 Gewichtsteile Xylol, 350 Gewichtsteile Solvent-Naphtha.
- 250 Gewichtsteile Methylisobutylketon, 180 Gewichtsteile Xylol, 350 Gewichtsteile Solvent-Naphtha.
- 30 Gewichtsteile Xylol, 80 Gewichtsteile Aceton, 80 Gewichtsteile Isobutylacetat.
- 100 Gewichtsteile Äthylacetat, 70 Gewichtsteile Toluol, 30 Gewichtsteile Aceton.
- 100 Gewichtsteile Toluol, 30 Gewichtsteile Aceton, 30 Gewichtsteile Methoxypropylacetat.

Steinerne Bauwerke oder Denkmäler, nachfolgend der Einfachheit halber als Bauwerke bezeichnet, sind über die Jahre hin einer ständigen Einwirkung der Atmosphäre unterworfen. Die in der Atmosphäre enthaltenen Schadstoffe, wie Kohlendioxid, Kohlenmonoxid, Schwefeldioxid oder Stickoxide wirken zusammen mit der durch Regen und Nebel aufgebrachten Feuchtigkeit ständig auf die Oberfläche der Bauwerke ein, Schmutz wird in den Poren abgelagert und zusammen mit den von Mikroorganismen erzeugten Stoffwechselprodukten wird das Steingefüge der Bauwerke zerstört, und so je nach Art des im Bauwerk verwendeten Steinmaterials ein mehr oder weniger schneller Abtrag bewirkt. Dies führt im Laufe der Jahre zu einer ständig fortschreitenden Zerstörung des Bauwerkes.

Insbesondere bei historischen Bauwerken erweist sich dieser ständige Zerstörungsprozeß als unangenehm, weil dadurch unersetzbare Werte für immer verloren gehen.

Man hat bereits große Anstrengungen gemacht, um diesem Zerstörungsprozeß Einhalt zu gebieten und um weiterhin die bereits entstandenen Schäden zu sanieren. Hierzu behandelt man Steinmaterialien mit Lösungen von Kieselsäureester. Man führt also dem Stein einen Teil seiner natürlichen Bindemittel wieder zu.

Das bekannte Kieselsäureester-Verfahren ist indessen für kalkgebundene Materialien nur in eingeschränktem Umfang anwendbar. Darüber hinaus ist ein weiterer Nachteil darin zu sehen, daß die in dem Steinmaterial vorhandenen Poren weitgehend verschlossen werden, so daß die natürliche Atmung des Steinmaterials nach der Behandlung beeinträchtigt wird.

Aus ähnlichen Erwägungen heraus ist auch das aus der DE-A 2 713 857 offenbarte Verfahren nicht akzeptabel. Hier werden die Bauwerke mit einer Isocyanat-Lösung so behandelt, daß eine Isolierung beziehungsweise Versiegelung auf der Oberfläche aufgebracht wird. Eine solche Maßnahme würde zu einem Verschluß der offenen Porosität bei einem Bauwerk der gattungsgemäßen Art führen und damit die beschriebenen Unregelmäßigkeiten in der Steinsubstanz nicht behandeln, sondern allenfalls kaschieren.

In der europäischen Patentanmeldung 87 111 797.4 ist ein Imprägniermittel für mineralische Substrate beschrieben, das unter Einfluß von Luftfeuchtigkeit aushärtet und folgende Komponenten enthält:

a1) organische Polyisocyanate mit ausschließlich aliphatisch oder cycloaliphatisch gebundenen Isocyanatgruppen

a2) Polysiloxane, die mindestens zwei alkoholisch gebundene Hydroxylgruppen und ein Molekulargewicht von 300 bis 5000 aufweisen

b) einem, gegenüber den Isocyanatgruppen inerten Lösungsmittel.

Aus der Literaturstelle "Chemical abstracts", Band 88, Nr. 22, 29. Mai 1978, Seite 318, Zusammenfassung Nr. 157 472v ist es bekannt, Betonteile mit Polyisocyanat-Prepolymerlösungen zu behandeln. Einerseits sollen damit Risse repariert werden, andererseits soll die Abriebfestigkeit des Betons erhöht werden. Auch hier handelt es sich ausschließlich um eine Versiegelung der Betonoberfläche, die eine Dampfdiffusion völlig verhindert.

In der DE-A 3 335 941 ist ein Verfahren zur Oberflächenbehandlung von Bauteilen, nämlich von Bauteilen aus Leichtbau-Porenbeton, beschrieben. Das Urethanbeschichtungsmaterial dringt hier in die offenen Poren der Betonmasse ein und schließt die Poren völlig. Dies geht bereits daraus hervor, daß der Feststoffanteil des Beschichtungsmaterials bei 30 bis 60 Prozent liegt.

Ausgehend von diesem Stand der Technik ist es Aufgabe der Erfindung, ein Verfahren zum Schutz, zur Sanierung und zur Restaurierung von steinernen Bauwerken offener Porosität zu schaffen, welches für alle Steinmaterialien anwendbar ist, und bei welchem vorallem das im Steinmaterial vorhandene Kapillargefüge aufrechterhalten bleibt.

Das erfindungsgemäße Verfahren zur Behandlung von Bauwerken läßt sich unterteilen in ein Verfahren, das ausschließlich zum Schutz noch nicht beschädigter Bauwerke dient, weiterhin in ein Verfahren zur Sanierung bereits beschädigter Bauwerke und schließlich in ein Verfahren zur Restaurierung stark beschädigter Bauwerke.

Entsprechend dieser Aufteilung umfaßt der erfindungsgemäße Vorschlag die drei alternativen Verfahren nach den Ansprüchen 1 bis 3.

Bei der Hydrophobierung nach Anspruch 1 dringt die Isocyanatlösung einige mm in das Steinmaterial ein. Das Lösungsmittel verdampft und das Isocyanat reagiert mit der Feuchtigkeit unter Ausbildung eines Polymerfilms, der die Oberfläche des Steins und das gesamte Kapillarsystem, und zwar die Kapillarwandungen in der vorstehend angegebenen Tiefe mit einem Polymerfilm überzieht. Die Kapillaren selbst bleiben indessen offen, und somit bleibt die Dampfdiffusionsfähigkeit des Steinmaterials weitestgehend erhalten.

Auf diese Weise wird eine Hydrophobierung der Oberfläche erreicht, die bewirkt, daß der Stein wasserabstoßend wird. Der Regen und der damit aufgebrachte Schmutz perlen also von dem Stein ab, und der Schmutz selbst wird nicht mehr auf dem Stein abgelagert. Damit entfällt der Lebensraum für die Mikroorganismen, die infolge ihrer Stoffwechselprodukte eine erste Anlösung des Steingefüges verursachen und dadurch die Voraussetzung für das Eindringen weiterer Feuchtigkeit und weiteren Schmutzes und die Einwirkung der in der Atmosphäre enthaltenen Schadstoffe schaffen.

Die für die Hydrophobierung notwendige Konzentration des Isocyanats in den, Lösungsmittel hängt von der Größe des Kapillarsystems des Steinmaterials ab. Eine ganz grobe Struktur des Steins erfordert einen wesentlich höheren Isocyanatanteil in der Lösung als eine feine Kapillarstruktur.

Die Konzentration der Lösung wird daher zweckmäßig anhand empirischer Versuche bestimmt.

Zur Sanierung von bereits beschädigten Bauwerken wird gemäß Anspruch 2 eine Lösung aus 3 bis 15 Gew.-% aliphatischem Polyisocyanat-Prepolymer und 97 bis 85 Gew.-% des damit inerten Lösungsmittels oder nach einer alternativen Ausführungsform der damit inerten Lösungsmittelgemische aufgetragen.

Diese Lösung dringt in die Poren ein, überzieht die Kapillarwandungen mit einem Polymerfilm und verfestigt so das bereits beschädigte Steingefüge. Die Kapillaren selbst bleiben jedoch intakt und stehen für die Dampfdiffusion des Steins weiter zur Verfügung.

Bei dem Verfahren entsteht keine geschlossene Oberflächenschicht, und es findet auch keine direkte chemische Reaktion mit dem Steinmaterial selbst statt. Es kommt nicht zur Krustenbildung.

Die Verfestigung erfolgt lediglich durch Eindringen in die Kapillarräume und Auskleiden der Wände der Kapillaren mit dem Polymerfilm, was zur Folge hat, daß die Art des Steins für das Verfahren völlig unbeachtlich ist und demzufolge auch im Gegensatz zu dem bekannten Kieselsäureester-Verfahren für das erfindungsgemäße Verfahren keine Beschränkung darstellt.

Die Restaurierung stark beschädigter Bauwerke erfolgt gemäß Anspruch 3 durch Auftragen einer formbaren Masse aus einer Lösung aus 8 bis 30 Gew.-% aliphatischem Polyisocyanat-Prepolymer und 92 bis 70 Gew.-% von damit inertem Lösungsmittel und mineralischen Bestandteilen.

Bei einer aufgetragenen formbaren Steinersatzmasse verdunstet das Lösungsmittel, und das zurückbleibende Isocyanat härtet unter dem Feuchtigkeitseinfluß aus, und die ausgehärtete Masse ersetzt die bereits verlorengegangene Steinsubstanz. Durch entsprechende Auswahl der in der formbaren Masse verwendeten mineralischen Bestandteile weisen die ersetzten Steinteile das gleiche Aussehen auf wie der Reststein.

Für das Aufbringen der Lösung finden die in den Ansprüchen genannten Verfahrenstechniken Anwendung. Ist für die Sanierung bereits beschädigter Bauwerke ein Tränken der Lösung wegen der Größe des Bauwerkes nicht möglich, so erfolgt ein mehrfaches Aufpinseln, Aufsprühen oder Auftragen mittels eines Fließfilmes (Fluten).

Das bei dem erfindungsgemäßen Verfahren zur Anwendung kommende Polyisocyanat-Prepolymer weist reaktionsfähige Isocyanatgruppen auf, die mit Luftfeuchtigkeit reagieren können und dabei Polymere bilden. Während der Gehalt an reaktionsfähigen NCO-Gruppen vorzugsweise bei ca. 8,5 Gew.-% liegt, liegt das Äquivalentgewicht vorzugsweise im Bereich von 500.

Auch andere Polyisocyanat-Prepolymere, die nach dem Einbringen in das Steingefüge polymerisieren und damit aushärten, können verwendet werden, ausgenommen organisches Polyisocyanat mit ausschließlich aliphatisch oder cycloaliphatisch gebundenen Isocyanatgruppen und mindestens zwei alkoholisch gebundene Hydroxylgruppen aufweisenden Polysiloxanen des Molekulargewichts 300 bis 5000.

Die bevorzugten Lösungsmittel werden nach Gesichtspunkten wie geringe Toxizität, Wohlfeilheit, gute Lösungseigenschaften oder gute Benetzung des Steinmaterials ausgewählt.

Bevorzugte Lösungsmittel ergeben sich aus Anspruch 6.

Für die Behandlung mit aliphatischem Isocyanat können auch Lösungsmittelkombinationen Anwendung finden. Bevorzugte Lösungsmittelmischungen sind im Anspruch 7 angegeben.

**Patentansprüche für die Vertragsstaaten: BE, DE, FR, GB, IT, NL**

1. Verfahren zur Hydrophobierung von durch Umwelteinflüsse und/oder Mikroorganismen unbeschädigten, steinernen Bauwerken offener Porosität mit folgenden Schritten:

1.1 eine Lösung aus einem aliphatischen Polyisocyanat-Prepolymer (ausgenommen organischem Polyisocyanat mit ausschließlich aliphatisch oder cycloaliphatisch gebundenen Isocyanatgruppen und mindestens zwei alkoholisch gebundene Hydroxylgruppen aufweisenden Polysiloxanen des Molekulargewichts 300 bis 5000) und einem oder mehreren, gegenüber dem Isocyanat inerten Lösungsmittel(n) wird auf das Bauwerk durch Aufsprühen, Aufpinseln oder Fluten aufgebracht, wobei

1.2 die Konzentration des Polyisocyanats in der Lösung innerhalb von Bereichsgrenzen zwischen 1 und 10 Gew.-%, entsprechend einem Lösungsmittelanteil zwischen 99 und 90 Gew.-%, in Abhängigkeit von der Größe der offenen Kapillarstruktur des Bauwerkes zuvor so eingestellt wurde, daß die Lösung nach Einwirken von Feuchtigkeit unter Ausbildung eines Polymerfilms auf der Oberfläche der Kapillarwandungen, unter Aufrechterhaltung der Dampfdiffusionsfähigkeit innerhalb des Kapillarsystems, aushärtet.

2. Verfahren zur Verfestigung von durch Umwelteinflüsse und/oder Mikroorganismen geschädigten, steinernen Bauwerken offener Porosität mit folgenden Schritten:

2.1 eine Lösung aus einem aliphatischen Polyisocyanat-Prepolymer (ausgenommen organischem Polyisocyanat mit ausschließlich aliphatisch oder cycloaliphatisch gebundenen Isocyanatgruppen und mindestens zwei alkoholisch gebundene Hydroxylgruppen aufwrisenden Polysiloxanen des Molckulargewichts 300 bis 5000) und einem oder mehreren, gegenüber dem Isocyanat inerten Lösungsmittel(n) wird auf das Bauwerk durch Tränken, Fluten oder mehrfaches Aufsprühen oder Aufpinseln aufgebracht, wobei

2.2 die Konzentration des Polyisocyanats in der Lösung innerhalb der Bereichsgrenzen zwischen 3 und 15 Gew.-%, entsprechend einem Lösungsmittelanteil zwischen 97 und 85 Gew.-%, in Abhängigkeit von der Größe der offenen Kapillarstruktur des Bauwerkes zuvor so eingestellt wurde, daß die Lösung nach Einwirken von Feuchtigkeit die Kapillarwandungen mit einem Polymerfilm überzieht und aushärtet und das beschädigte Steingefüge verfestigt, unter Aufrechterhaltung der Dampfdiffusionsfähigkeit innerhalb des Kapillarsystems.

3. Verfahren zur Restaurierung von durch Umwelteinflüsse und/oder Mikroorganismen stark beschädigten, steinernen Bauwerken offener Porosität mit teilweise verlorengegangener Steinsubstanz, mit folgenden Schritten:

3.1 eine formbare Masse aus einem aliphatischen Polyisocyanat-Prepolymer und einem oder mehreren, gegenüber dem Isocyanat inerten Lösungsmittel(n) sowie mineralischen Bestandteilen wird auf die beschädigten Stellen des Bauwerkes aufgebracht, wobei

3.2 die Konzentration des Polyisocyanats, bezogen auf die Lösung aus Polyisocyanat und Lösungsmittel, 8 bis 30 Gew.-%, entsprechend einem Lösungsmittel anteil zwischen 92 und 70 Gew.-%, beträgt und

3.3 die Masse anschließend unter Bildung eines Steinersatzes unter Feuchtigkeitseinfluß aushärtet.

4. Verfahren nach einem der Ansprüche 1 bis 3 mit der Maßgabe, daß ein Polyisocyanat-Prepolymer verwendet wird, dessen Gehalt an reaktionsfähigen NCO-Gruppen circa 8,5 Gew.-% beträgt.

5. Verfahren nach einem der Ansprüche 1 bis 4 mit der Maßgabe, daß das Lösungsmittel aus Xylol, Methylisob-butylketon, Solvent-Naphtha, Toluol, Äthylacetat, Isobutylacetat, Aceton oder Methoxypropylacetat einzeln oder in Mischungen besteht.

6. Verfahren nach Anspruch 5 mit der Maßgabe, daß eine der folgenden Lösungsmittelmischungen verwendet wird:

— 30 Gewichtsteile Xylol, 100 Gewichtsteile Methyliso-butylketon.

— 250 Gewichtsteile Isobutylacetat, 180 Gewichtsteile Xylol, 350 Gewichtsteile Solvent-Naphtha.

— 250 Gewichtsteile Methylisobutylketon, 180 Gewichtsteile Xylol, 350 Gewichtsteile Solvent-Naphtha.

— 30 Gewichtsteile Xylol, 80 Gewichtsteile Aceton, 80 Gewichtsteile Isobutylacetat.

— 100 Gewichtsteile Äthylacetat, 70 Gewichtsteile Toluol, 30 Gewichtsteile Aceton.

— 100 Gewichtsteile Toluol, 30 Gewichtsteile Aceton, 30 Gewichtsteile Methoxypropylacetat.

## Revendications pour les Etats Contractants: AT, CH, ES, GR, LI, LU, SE

1. Procédé de traitement hydrophobe destiné aux ouvrages en pierre à porosité ouverte, non détériorés par les influences extérieures et/ou les micro-organismes, comportant les étapes suivantes:

1.1 sur l'ouvrage est appliquée par pulvérisation, au pinceau, ou par arrosage, une solution composée d'un isocyanate aliphatique et d'un ou plusieurs solvant(s) inerte(s) par rapport à l'isocyanate, où

1.2 en fonction des dimensions de la structure capillaire ouverte de l'ouvrage, la concentration d'isocyanate dans la solution a été ajustée préalablement à une valeur située dans les limites d'une fourchette comprise entre 1 et 10% en poids, pour une portion de solvant entre 99 et 90% en poids, de façon que la solution se solidifie après l'action de l'humidité en formant un film polymère sur la surface des parois capillaires, tout en maintenant la capacité de diffusion de vapeur à l'intérieur du système capillaire

2. Procédé de consolidation destiné aux ouvrages en pierre à porosité ouverte, détériorés par les influences extérieures et/ou les micro-organismes, comportant les étapes suivantes:

2.1 sur l'ouvrage est appliquée par imprégnation, arrosage ou par plusieurs pulvérisations ou applications au pinceau, une solution composée d'un isocyanate aliphatique et d'un ou plusieurs solvant(s) inerte(s) par rapport à l'isocyanate, où

2.2 en fonction des dimensions de la structure capillaire ouverte de l'ouvrage, la concentration d'isocyanate dans la solution a été ajustée, préalablement à une valeur située dans les limites d'une fourchette comprise entre 3 et 15% en poids, pour une portion de solvant entre 97 et 85% en poids, de façon qu'après l'action de l'humidité, la solution recouvre la surface des parois capillaires d'un film polymère et se solidifie, consolidant la texture détériorée de la pierre, tout en maintenant la capacité de diffusion de vapeur à l'intérieur du système capillaire.

3. Procédé de restauration destiné aux ouvrages en pierre à porosité ouverte, fortement détériorés par les influences extérieures et/ou les micro-organismes avec disparition partielle de la matière de la pierre, comportant les étapes suivantes:

3.1 sur les zones détériorées de l'ouvrage est appliquée une masse plastique composée d'un isocyanate aliphatique et d'un ou plusieurs solvant(s) inerte(s) par rapport à l'isocyanate, ainsi que de composants minéraux, où

3.2 la concentration d'isocyanate par rapport à la solution composée d'isocyanate et de solvant, est de 8 à 30% en poids pour une part de solvant comprise entre 92 et 70% en poids et

3.3 la masse se solidifie ensuite en formant une substance remplaçant la pierre, sous l'influence de l'humidité.

4. Procédé selon l'une quelconque des revendications 1 à 3, caractérisé en ce que l'isocyanate aliphatique utilisé est un prépolymère de polyisocyanate.

5. Procédé selon la revendication 4, caractérisé en ce qu'il utilise un prépolymère de polyisocyanate dont la teneur en groupes NCO réactifs est de l'ordre de 8,5% en poids.

6. Procédé selon l'une quelconque des revendications 1 à 5, caractérisé en ce que le solvant est constitué de xylène, méthylisobutylcétone, solvant naphta, toluène, acétate d'éthyle, acétate d'isobutyle, acétone ou méthoxypropylacétate, utilisés seuls ou mélangés entre eux.

7. Procédé selon la revendication 6, caractérisé en ce qu'il utilise l'un ou l'autre des mélanges de solvants suivants:
- 30 parties en poids de xylène, 100 parties en poids de méthylisobutylcétone,
- 250 parties en poids d'acétate d'isobutyle, 180 parties en poids de xylène, 350 parties en poids de solvant naphta,
- 250 parties en poids de méthylisobutylcétone, 180 parties en poids de xylène, 350 parties en poids de solvant naphta,
- 30 parties en poids de xylène, 80 parties en poids d'acétone, 80 parties en poids d'acétate d'isobutyle,
- 100 parties en poids d'acétate d'éthyle, 70 parties en poids de toluène, 30 parties en poids d'acétone,
- 100 parties en poids de toluène, 30 parties en poids d'acétone, 30 parties en poids de méthoxypropylacétate.

**Revendications pour les Etats Contractants: BE, DE, FR, GB, IT, NL**

1. Procédé de traitement hydrophobe destiné aux ouvrages en pierre à porosité ouverte, non détoriés par les influences extérieures et/ou les micro-organismes, comportant les étapes suivantes:
1.1 sur l'ouvrage est appliquée par pulvérisation, au pinceau ou par arrosage, une solution composée d'un prépolymère de polyisocyanate aliphatique (à l'exception de polyisocyanate organique comportant des groupes isocyanates exclusivement en liaison aliphatique ou cycloaliphatique et de polysiloxanes d'un poids moléculaire de 300 à 5000, présentant au moins deux groupes hydroxyles en liaison alcoolique) et d'un ou plusieurs solvant(s) inerte(s) par rapport à l'isocyanate, où
1.2 en fonction des dimensions de la structure capillaire ouverte de l'ouvrage, la concentration du polyisocyanate dans la solution a été ajustée prénlablcnierit, à l3n9 valeur située:dans les limites d'une fourchette comprise entre 1 et 10% en poids, pour une part de solvant entre 99 et 90% en poids, de façon que la solution se solidifie après l'action de l'humidité en formant un film polymère sur la surface des parois capillaires, tout en maintenant la capacité de diffusion de vapeur à l'intérieur du système capillaire.
2. Procédé de consolidation destiné aux ouvrages en pierre à porosité ouverte, détériorés par les influences extérieures et/ou les micro-organismes, comportant les étapes suivantes:
2.1 sur l'ouvrage est appliquée par imprégnation, arrosage ou par plusieurs pulvérisations ou applications au pinceau, une solution composée d'un prépolymère de polyisocyanate aliphatique (à l'exception de polyisocyanate organique comportant des groupes isocyanates exclusivement en liaison aliphatique ou cycloaliphatique, et de polysiloxanes d'un poids moléculaire de 300 à 5000, présentant au moins deux groupes hydroxyles en liaison alcoolique) et d'un ou plusieurs solvant(s) inerte(s) par rapport à l'isocyanate, où
2.2 en fonction des dimensions de la structure capillaire ouverte de l'ouvrage, la concentration de polyisocyante dans la solution a été ajustée préalablement à une valeur située dans les limites d'une fourchette comprise entre 3 et 15% en poids, pour une part de solvant entre 97 et 85% en poids, de façon que, après l'action de l'humidité, la solution recouvre la surface des parois capillaires d'un film polymère et se solidifie, consolidant la texture détériorée de la pierre, tout en maintenant la capacité de diffusion de vapeur à l'intérieur du système capillaire.

3. Procédé de restauration destiné aux ouvrages en pierre à porosité ouverte, fortement détériorés par les influences extérieures et/ou les micro-organismes avec disparition partielle de la matière de la pierre, comportant les étapes suivantes:
3.1 sur les zones détériorées de l'ouvrage est appliquée une masse plastique composée d'un prépolymère de polyisocyanate aliphatique et d'un ou plusieurs solvant(s) inerte(s) par rapport à l'isocyanate, ainsi que de composants minéraux, où
3.2 la concentration du polyisocyanate par rapport à la solution composée de polyisocyanate et de solvant, est de 8 à 30% en poids pour une portion de solvant comprise entre 92 et 70% en poids, et
3.3. la masse se solidifie ensuite en formant une substance remplaçant la pierre, sous l'influence de l'humidité

4. Procédé selon l'une quelconque des revendications 1 à 3, caractérisé en ce qu'il utilise un prépolymère de polyisocyanate dont la teneur en groupes NCO réactifs est de l'ordre de 8,5% en poids.

5. Procédé selon l'une quelconque des revendications 1 à 4, caractérisé en ce que le solvant est constitué de xylène, méthylisobutylcétone, solvant naphta, toluène, acétate d'éthyle, acétate d'isobutyle, acétone, ou méthoxypropylacétate, utilisés seuls ou mélangés entre eux.

6. Procédé selon la revendication 5, caractérisé en ce qu'il utilise l'un ou l'autre des mélanges de solvants suivants:
- 30 parties en poids de xylène, 100 parties en poids de méthylisobutylcétone, - 250 parties en poids d'acétate d'isobutyle, 180 parties errpoids de xylène, - 350 parties en poids de solvant naphta,
- 250 parties en poids de méthylisobutylcétone,
- 180 parties en poids de xylène,
- 350 parties en poids de solvant naphta,
- 30 parties en poids de xylène, 80 parties en poids d'acétone, 80 parties en poids d'acétate d'isobutyle,
- 100 parties en poids d'acétate d'éthyle, 70 parties en poids de toluène, 30 parties en poids d'acétone,
- 100 parties en poids de toluènes, 30 parties en poids d'acétone, 30 parties en poids de mêthoxypropylacétate.

**Claims valid for the following designated states: AT, CH, ERS, GR, LI, LU, SE**

1. Method for hydrophobizing stone structures of open porosity, as yet undamaged by environmental influences and/or microorganisms, including the following steps:

3.3 applying lo said stone structure a solution consisting of an aliphatic isocyanate and one or more solvents, inert to said isocyanate, by spraying, painting or flooding,

1.2 the concentration of said isocyanate in said solution being chosen between 3 and 10 weight-%, corresponding 99 to 90 weight-% of said solvent, dependent of the size of open capillary structure of said stone structure permitting said solution to harden upon reaction with moisture, thereby forming a polymeric film on the surface of said capillary walls, while remaining the vapor diffusion capability within said capillary system.

2. Method fur consolidation of stone structures of open porosity, damaged by environmental influences and/or micro organisms, with the following steps:

2.3 applying to said stone structure a solution consisting of an aliphatic isocyanate and one or more solvents inert to said isocyanate by seaking, flooding or multiple spraying or painting,

2.2 the concentration of said isocyanate in said solution being chosen in the range of 3 to 15 weight-%, corres ponding to an amount of said solvent between 97 and 85 weight-%, dependent of the size of open capillary structure of said stone structure, permitting said solution to cover said capillary walls, upon reaction with moisture, with a polymeric film, to harden and to consolidate said damaged stone structure, while keeping the vapor diffusion capability within said capillary system intact.

3. Method for restoring stone structures of open porosity, heavily damaged by environmental influences or microorganisms with loss of stone with the following steps:

3.1 a moldable composition which consists of an aliphatic isocyanate, one or more solvents, inert to said iso cyanate and mineral constituents is applied to said damaged parts of said stone structure

3.2 the concentration of said isocyanate being in the range of 8–30% by weight, relative to said solution of isocyanate and solvent, corresponding to 92 to 70% by weight of said solvent and

3.3 allowing said mass to harden under the influence of moisture and to form a new stone structure.

4. Method according to one of claims 1 to 3 wherein said aliphatic isocyanate is an polyisocyanate prepolymer.

5. Method according to claim 4 wherein a polyisocyanate prepolymer is used with approximately 8.5% by weight of reactive NCO groups.

6. Method according to one of claims 1 to 5, wherein said solvent is selected from xylene, methyl isobutyl ketone, solvent naphtha, toluene, ethyl acetate, isobutyl acetate, acetone or methoxypropyl acetate, or mixtures thereof.

7. Method according to claim 6, wherein one of the following solvent mixtures is used:
 — 30 parts by weight of xylene, 100 parts by weight of methyl isobutyl ketone.
 — 250 parts by weight of isobutyl acetate, 180 parts by weight of xylene, 350 parts by weight of solvent naphtha.
 — 250 parts by weight of methyl isobutyl ketone, 180 parts by weight of xylene, 350 parts by weight of solvent naphtha.
 — 30 parts by weight of xylene, 80 parts by weight of acetone, 80 parts by weight of isobutyl acetate.
 — 300 parts by weight of ethyl acetate, 70 parts by weight of toluene, 30 parts by weight of acetone.
 — 100 parts by weight of toluene, 30 parts by weight of acetone, 30 parts by weight of methoxypropyl acetate.

**Claims valid for the following designated states: BE, DE, FR, GB, IT, NL**

1. Method for hydrophobizing stone structures of open porosity, as yet undamaged by environmental influences and/or microorganisms, including the following steps:

1.1 applying to said stone structure a solution consisting of an aliphatic polyisocyanate prepolymer (except organic polyisocyanate containing exclusively aliphatic or cycloaliphatic bonded isocyanate groups and at least two polysiloxanes of a molecular weight between 300 and 5000 with alcoholically bonded hydroxyl groups) and one or more solvents, inert to said isocyanate, by spraying, painting or flooding,

1.2 the concentration of said polyisocyanate in said solution being chosen between 1 and 10 weight-%, corresponding 99 to 90 weight-% of said solvent, dependent of the size of open capillary structure of said stone structure permitting said solution to harden upon reaction with moisture, thereby forming a polymeric film on the surface of said capillary walls, while remaining the vapor diffusion capability within said capillary system.

2. Method for consolidation of stone structures of open porosity, damaged by environmental influences and/or microorganisms, with the following steps:

2.1 applying to said stone structure a solution consisting of an aliphatic polyisocyanate prepolymer (except organic polyisocyanate containing exclusively aliphatic or cycloaliphatic bonded isocyanate groups and at least two polysiloxanes of a molecular weight between 300 and 5000 with alcoholically bonded hydroxyl groups) and one or more solvents inert to said isocyanate by seaking, flooding or multiple spraying or painting,

2.2 the concentration of said polyisocyanate in said solution being chosen in the range of 3 to 15 weight-%, corresponding to an amount of said solvent between 97 and 85 weight-%, dependent of the size of open capillary structure of said stone structure, permitting said solution to cover said capillary walls, upon reaction with moisture, with a polymeric film, to harden and to consolidate said damaged stone structure, while keeping the vapor diffusion capability within said capillary system intact.

3. Method for restoring stone structures of open porosity heavily damaged by environmental influences or microorganisms with loss of stone with the following steps:

3.1 a moldable composition which consists of an aliphatic polyisocyanate prepolymer, one or more solvents, inert to said isocyanate and mineral constituents is applied to said damaged parts of said stone structure

3.2 the concentration of said polyisocyanate being in the range of 8–30% by weight, relative to said solution of polyisocyanate and solvent, corresponding to 92 to 70% by weight of said solvent and

3.3 allowing said mass to harden under the influence of moisture and to form a new stone structure.

4. Method according to one of claims 1 to 3 wherein a polyisocyanate prepolymer is used with approximately 8.5% by weight of reactive NCO groups.

5. Method according to one of claims 1 to 4, wherein said solvent is selected from xylene, methyl isobutyl ketone, solvent naphtha, toluene, ethyl acetate, isobutyl acetate, acetone or methoxypropyl acetate, or mixtures thereof.

6. Method according to claim 5, wherein one of the following solvent mixtures is used:

– 30 parts by weight of xylene, 300 parts by weight of methyl isobutyl ketone.

– 250 parts by weight of isobutyl acetate, 180 parts by weight of xylene, 350 parts by weight of solvent naphtha.

– 250 parts by weight of methyl isobutyl ketone, 180 parts by weight of xylene, 350 parts by weight of solvent naphtha.

– 30 parts by weight of xylene, 80 parts by weight of acetone, SO parts by weight of isobutyl acetate.

– 100 parts by weight of ethyl acetate, 70 parts by weight of toluene, 30 parts by weight of acetone.

– 100 parts by weight of toluene, 30 parts by weight of acetone, 30 parts by weight of methoxypropyl acetate.